# EUROPÄISCHE PATENTANMELDUNG

(11) **EP 1 195 732 A2**
(43) Veröffentlichungstag der Anmeldung: **10.04.2002**
(21) Anmeldenummer: 01123420.0
(22) Anmeldetag: 28.09.2001
(51) Int. Cl.: G07G 1/00, G07F 7/10, G07C 9/00

(54) **Verfahren und Einrichtung zur kundenorientierten Nutzung von Identifikationssystemen**

(30) Priorität: 02.10.2000 DE 10048856; 14.02.2001 DE 10106725; 17.03.2001 DE 10113144; 02.05.2001 DE 10121464
(71) Anmelder: Brauweiler, Werner, 52351 Düren (DE)
(72) Erfinder: Brauweiler, Werner, 52351 Düren (DE)
(74) Vertreter: Christl, Hermann, Dipl.-Ing.

(57) **Zusammenfassung**

Um die bekannten Kundenidentifikationssysteme so weiter auszubilden, dass insbesondere im kundenorientierten Dienstleistungsbereich die jeweiligen Kundengeschäfte noch schneller und sicherer als bisher abgewickelt werden können, wird erfindungsgemäß vorgeschlagen, zusätzlich zur visuellen Darstellung des Namenszuges und/oder des Fotos der jeweiligen Kundenperson (6) das Kundenkonto bzw. die Kundenkartei zu öffnen und darzustellen, die in einem beim Kundenbetreuer/Kundenberater/Verkäufer installierten Computer (3) gespeichert ist.

## Beschreibung

Die Erfindung betrifft ein Verfahren zur kundenorientierten Nutzung eines elektronischen Identifikationssystems, wobei personenbezogene elektronisch gespeicherte Daten von einem Lesemodul erfasst und von einem Computer ausgewertet werden. Außerdem betrifft die Erfindung eine Einrichtung zur Durchführung des Verfahrens.

Aus der Patentanmeldung WO 00/45346 ist ein System zur Identifikation von Kundenpersonen bekannt, bei dem beispielsweise ein Verkäufer in einem Ladengeschäft auch bei starkem Kundenandrang über jeden in das Geschäft eintretenden neuen Kunden informiert wird, und zwar vermittels einer vom Kunden mitgeführten Chipkarte, auf der Kundenkenndaten gespeichert sind, die nach ihrer berührungslosen Erfassung in der Weise ausgewertet werden, dass die jeweilige Kundenperson im Ladengeschäft auf einem Bildschirm oder Display visuell dargestellt wird, z. B. als Foto und/oder Namenszug der Kundenperson, und/oder dass die Kundenperson von einem Lautsprecher namentlich genannt wird.
Ferner sind Telefonanlagen bekannt, bei denen die Rufnummer und ggf. der Name des Anrufers zu dessen schnellen Identifikation beim Angerufenen schon vor Aufnahme des Telefongespräches angezeigt werden.

In beiden Fällen besteht insbesondere im kundenorientierten Dienstleistungsbereich, also bei der Geschäftsbeziehung zwischen Kunde einerseits und Kundenbetreuer/Kundenberater/Verkäufer andererseits seitens der letzteren Gruppe der Wunsch, die bisher bekannten Identifikationssysteme zwecks zielgerichteter Abwicklung der Kundengeschäfte noch weiter auszubauen.

Der Erfindung liegt daher die Aufgabe zugrunde, die bekannten elektronischen Kundenidentifikationssysteme so weiter auszubilden, dass insbesondere im kundenorientierten Dienstleistungsbereich die jeweiligen Kundengeschäfte noch schneller und sicherer als bisher abgewickelt werden können.

Diese Aufgabe wird gemäß der Erfindung mit einem Verfahren mit den Maßnahmen des Anspruchs 1 und mit einer Einrichtung mit den Merkmalen des Anspruchs 7 gelöst. Vorteilhafte Weiterbildungen der Erfindung sind in den jeweiligen Unteransprüchen angegeben.

Beim erfindungsgemäßen Identifikationssystem wird zusätzlich zur visuellen Darstellung des Namenszuges und/oder des Fotos der jeweiligen Bezugs- bzw. Kundenperson das Kundenkonto bzw. die Kundenkartei geöffnet und dargestellt, die in einem beim Kundenbetreuer/Kundenberater/Verkäufer installierten Computer gespeichert ist. Die Öffnung des Kundenkontos kann mit Vorteil selbsttätig durch den Computer erfolgen, wodurch mögliche Fehler bei der bisher üblichen manuellen Kontoöffnung vermieden werden und insgesamt viel Zeit bei der Abwicklung des Kundengeschäftes eingespart wird. Außerdem kann der Kundenbetreuer beim visuellen Vergleich des gespeicherten Kundenfotos mit dem Kundenkonto und mit dem tatsächlichen Aussehen des Kunden dessen Identität und Berechtigung zur Kontoverfügung nochmal überprüfen. Schließlich besteht auch die Möglichkeit, dass zusätzlich zur visuellen Darstellung des Namenszuges und/oder des Fotos des jeweiligen Kunden ein von ihm im Rahmen der Geschäftsbeziehung früher gekauftes Objekt wie z. B. Kraftfahrzeug, Immobilie, Möbelstück etc. auf dem Computer-Bildschirm des Verkäufers dargestellt wird.

Nach einer vorteilhaften Ausgestaltung der Erfindung ist es bei Anwesenheit mehrerer Kunden auch möglich, diese in der Reihenfolge ihrer Erfassung mit Namenszug und/oder Foto gleichzeitig auf einem Computer-Bildschirm und/oder Display eines tragbaren Empfängers darzustellen. Dies macht es dann erforderlich, die Öffnung des Kundenkontos nach der visuellen Darstellung der Kundenpersonen durch Tastendruck manuell vorzunehmen.

Die personenbezogenen Daten können auf dem Chip einer von der Kundenperson mitgeführten Chipkarte gespeichert sein. Der Chip ist erfindungsgemäß ein Multifunktions-Chip, auf dem insbesondere aus Datenschutzgründen keine den Datenschutz berührende Kundendaten, sondern beispielsweise wenigstens eine den Datenschutz nicht berührende unikate Identifikationsnummer gespeichert ist, die mit den im Computer des jeweiligen Computerbetreibers wie z. B. Ladengeschäft, Hotel, Bank etc. mit den dort gespeicherten Daten (Namenszug, Foto, Kundenkonto, Kundenkartei etc.) verknüpfbar ist. Bei einem Verlust einer derartigen Chipkarte beispielsweise durch Diebstahl ist mit Vorteil kein Missbrauch zu befürchten, da durch die unikate Identifikationsnummer nur eine Kommunikation mit dem verknüpften, dem Dieb unbekannten Computer möglich ist.

Der Vorteil einer derartigen Chipkarte mit Multifunktions-Chip besteht weiterhin darin, dass diese Chipkarte aufgrund ihrer gespeicherten unikaten (weltweit einmaligen) Identifikationsnummer über verschiedene Computer mit unterschiedlichen Daten, beispielsweise mit unterschiedlichen Kundenkonten, verknüpft werden kann. So wird es dann möglich, mit nur einer Multifunktions-Chipkarte auch in so unterschiedlichen Branchen wie z. B. Banken, Bibliotheken, Arztpraxen, Hotels, Ladengeschäften etc. ein dort jeweils abgespeichertes Kundenkonto abzurufen.

Da auf einer derartigen Multifunktions-Chipkarte der Namenszug und das Foto des Kunden nicht als Daten gespeichert sind, ist es erforderlich, diese Daten im Computer abzuspeichern. Zur Abspeicherung des Fotos ist es deshalb erforderlich, den Computer mit einem Scanner oder einer elektronischen Kamera zu verbinden, um diese gewonnenen Daten zu den übrigen Kundendaten hinzuzufügen. Die Kundendaten können an vernetzte Filialen weitergeleitet werden, so dass die Multifunktions-Chipkarte dann z. B. auch in diesen Filialen, beispielsweise bei Bank- oder Hotelketten usw. verwendet werden kann.

Der Multifunktions-Chip kann nach einem weiteren Merkmal der Erfindung statt an einer Chipkarte an einem Schlüssel der Kundenperson angeordnet sein. Durch die Maßnahme, den Chip mit einem Schlüssel zu verbinden, wird mit Vorteil erreicht, dass der Chip stets mit dem Schlüssel mitgeführt wird, so dass die Vorteile des Identifikationssystems stets optimal genutzt werden können. Nach einer vorteilhaften Ausgestaltung der Erfindung kann der Chip dabei im Griff des Schlüssels, vorzugsweise Autoschlüssels oder z. B. auch Haustürschlüssels angeordnet sein, wodurch in einfacher Weise eine Verbindung des Schlüssels mit dem Chip hergestellt ist. Es ist aber auch möglich, den Chip innerhalb eines Schlüsselanhängers oder eines Schlüsseletuis anzuordnen, wobei diese dann mit dem Schlüssel verbunden sind.

Durch das Merkmal der Erfindung, den Multifunktions-Chip mit dem Autoschlüssel zu verbinden und zusätzlich zur Darstellung des Kunden-Namenszuges auch das Kennzeichen und ein Foto des zum Autoschlüssel gehörenden Autos auf dem Bildschirm des Computers darzustellen, ergeben sich Vorteile insbesondere beim Kundenservice der Automobilindustrie:
Bereits beim Autokauf (Neuwagen oder Gebrauchtwagen) wird dem Käufer mit dem Auto ein Autoschlüssel überreicht, der mit einem erfindungsgemäßen Chip verbunden ist. Beim Besuch einer Vertragswerkstatt z. B. anlässlich der Durchführung einer Inspektion wird dann bereits bei der Übergabe des Autoschlüssels das Kundenkonto mit den für die Inspektion relevanten Daten geöffnet. Im weiteren Verlauf des Verbleibs des Autos in der Werkstatt kann darüber hinaus vom Personal der Werkstatt jederzeit in einfacher Weise die Zugehörigkeit des Autoschlüssels zum Auto durch das auf dem Bildschirm dargestellte Foto des Autos sowie dessen Kennzeichen festgestellt werden, so dass beispielsweise das Anbringen des Kennzeichens am Autoschlüssel nicht erforderlich ist. Mit Hilfe des mit dem Autoschlüssel verbundenen Chips ist die Zuordnung zum zugehörenden Auto also jederzeit und ohne Verwechslungsgefahr gegeben.

Beim Einbringen des Chips in einen Autoschlüssel kann dabei nach einer vorteilhaften Ausgestaltung der Erfindung die bei neuzeitlichen Autos vorhandene Batterie im Autoschlüssel (für die berührungslose Betätigung der Zentralverriegelung) dazu genutzt werden, die Erfassungsreichweite für die berührungslose Erfassung der Chipdaten zu vergrößern, wozu der Chip mit der Batterie in einen elektrischen Kontakt gebracht wird. Es ist aber auch möglich, diesen elektrischen Kontakt mit einer elektrischen Strom liefernden Solarzelle herbeizuführen, wozu dann eine kleine aber ausreichend starke Solarzelle im Schlüsselgriff angeordnet ist.

Weiterhin ist es gemäß der Erfindung aber auch möglich, zur Sicherstellung der elektrischen Stromversorgung die Solarzelle zusätzlich zur Batterie im Schlüsselgriff anzuordnen und dann die Bauteile Chip, Batterie, Solarzelle in geeigneter Weise miteinander zu verbinden. Hierbei ist insbesondere darauf zu achten, dass durch die aus Platzgründen auf engem Raum nebeneinander oder übereinander angeordneten Bauteile die berührungslose Erfassung der Chipkartendaten weder beeinflusst (verfälscht) noch behindert wird.

Die Erweiterung der Erfassungsreichweite des Chips durch die Herstellung eines elektrischen Kontakts mit einer Stromquelle ist dabei nicht auf die Verwendung in einem Autoschlüssel beschränkt, sondern kann auch bei anderen Schlüsseln angewendet werden, wenn entsprechende Stromquellen in derartige Schlüssel eingebracht werden.

Gemäß einer weiteren Anwendung der Erfindung können die personenbezogenen elektronischen Daten über eine Telefonverbindung übertragen und beim Empfänger des Telefonanrufs erfasst und ausgewertet werden. Dabei werden die bei Beginn des Telefonats übertragenen Daten dazu verwendet, schon vor der Aufnahme des Telefonhörers und zumindest während des Telefongesprächs selbsttätig beim Angerufenen eine dort in einer entsprechenden Vorrichtung, beispielsweise einem Computer gespeicherte, den Anrufenden kennzeichnende Datei zu öffnen und beispielsweise ein Foto, eine grafische Darstellung, ein Kundenkonto oder eine Kombination hiervon auf einem Bildschirm des Angerufenen abzubilden. Die visuelle Darstellung kann erfindungsgemäß auf einem Monitor eines mit der Telefonanlage verknüpften Computers erfolgen, wobei dieser Monitor dann sinnvoller Weise in unmittelbarer Nähe des Telefonapparates beim Angerufenen anzuordnen ist. Es ist aber auch möglich, ein entsprechend ausgestattetes Telefon, z. B. ein Mobiltelefon mit großem Display für diese Nutzung einzusetzen, wobei bei Vorhandensein eines entsprechend ausgestatteten Speichers die erforderlichen Bilddaten der Datei im Telefon selbst gespeichert sind und eine Verknüpfung mit einem Computer nicht mehr erforderlich wird.

Durch die erfindungsgemäße Verwendung der während des Telefonats übertragenen Daten und Öffnung einer visuellen Datei wird der Angerufene bereits vor der eigentlichen Aufnahme des Gesprächs durch eine entsprechende visuelle Darstellung über die Identität des Anrufenden und über den wahrscheinlichen Grund des Anrufs in Kenntnis gesetzt, so dass der Angerufene das Gespräch entsprechend zielgerichtet kundenbezogen eröffnen und führen kann. Die visuelle Datei kann dabei je nach der bestehenden Geschäftsbeziehung beispielsweise auch ein Foto des verkauften Gegenstandes (Auto mit Kennzeichen, antikes Möbelstück, Immobilie mit Adresse etc.), eine graphische Darstellung in Form eines Firmenlogos oder aber das Kundenkonto bzw. eine Kundendatei (insbesondere bei Dienstleistungen, Banken, Versicherungen etc) zum Inhalt haben. Wichtig ist hierbei, dass die visuelle Datei auf den Anrufenden zugeschnitten ist und eindeutig auf die mit ihm bestehende Geschäftsbeziehung hinweist.

Weitere Vorteile, Merkmale und Einzelheiten der Erfindung werden nachfolgend anhand von in schematischen Zeichnungsfiguren dargestellten Ausführungsbeispielen näher erläutert. Es zeigt:
- Fig. 1: eine Draufsicht auf einen größeren Verkaufsraum, und
- Fig. 2: einen Autoschlüssel mit integriertem Chip

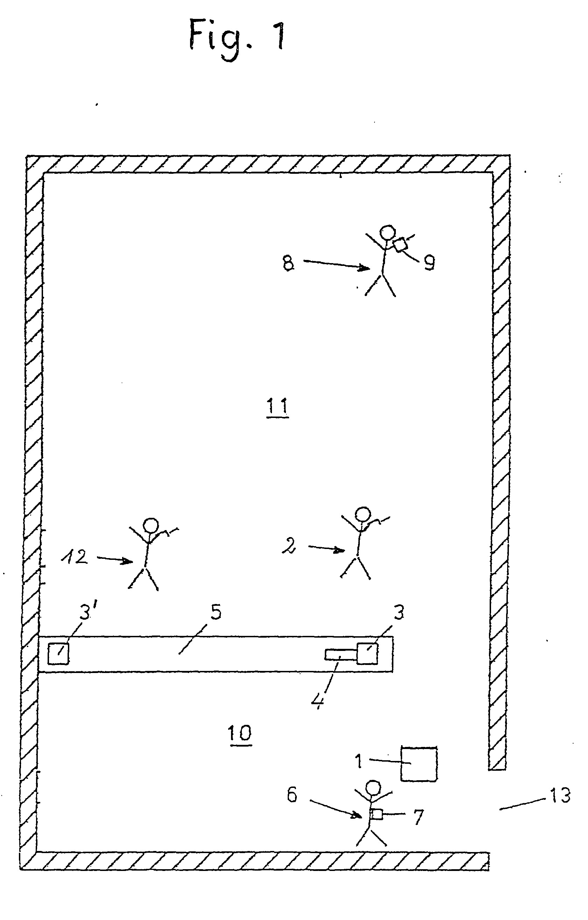

Fig. 1 zeigt in einer Draufsicht einen größeren Verkaufsraum 11, bei dem durch eine Ladentheke 5 ein Publikumsbereich 10 abgetrennt ist. Auf der Ladentheke 5 befinden sich zwei miteinander vernetzte Computer 3, 3' jeweils mit Bildschirm, sowie ein mit dem Computer 3 verbundener Scanner 4.

Innerhalb des Publikumsbereichs 10 ist in unmittelbarer Nähe der Eingangstüre 13 ein Chipkartenlesemodul 1 angeordnet, das in ihrem Wirkbereich die Daten der von einer Kundenperson 6 mitgeführten Chipkarte 7 berührungslos erfasst und diese über eine (nicht dargestellte) Leitung oder per Funk dem Computer 3 übermittelt. Nach Auswertung der Daten erscheint auf den Bildschirmen der Computer 3 und 3' der Namenszug und/oder ein Foto der Kundenperson 6, bei mehreren Kunden entsprechend mehrere Namenszüge und/oder Fotos in der Reihenfolge ihrer Erfassung.

Die hinter der Ladentheke 5 arbeitenden Kundenbetreuer 2, 12 können nun durch einfachen Tastendruck jeweils einen Kundennamen und/oder ein Kundenfoto anwählen und damit das zugehörende Kundenkonto öffnen. Ein im hinteren Bereich des Ladengeschäftsraums 11 arbeitender Kundenbetreuer 8 wird über einen tragbaren Empfänger 9 gleichfalls über die Erfassung der Kunden und deren Anzahl informiert und kann bei Bedarf dann an der Ladentheke aushelfen. Bei der Verwendung einer Multifunktions-Chipkarte ist es erforderlich, die Daten des Kundenkontos sowie die Daten der Kundenidentifikation mit der unikaten Identifikationsnummer zu verknüpfen, wozu, falls dies noch nicht im Computer 3 abgespeichert ist, ein Foto der Kundenperson 6 mittels des Scanners 4 oder einer nicht dargestellten digitalen Kamera in den Computer 3 eingelesen wird.

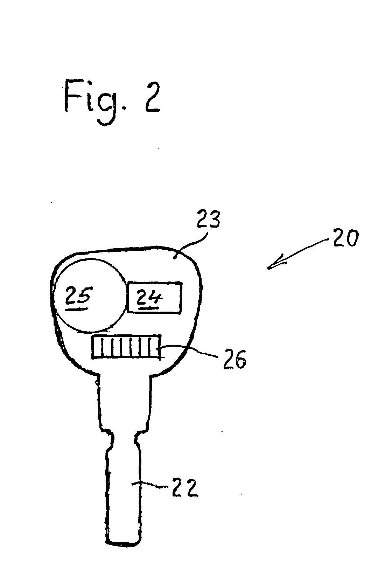

In Fig. 2 ist ein Autoschlüssel 20 in einer geschnittenen Draufsicht dargestellt. Der Schlüssel 20 besteht dabei aus dem Schlüsselbart 22, der die eigentliche Schließfunktion herbeiführt, und dem Schlüsselgriff 23 zur manuellen Betätigung des Schlüssels. In diesen Schlüsselgriff 23, in dem sich bereits eine Batterie 25 zum berührungslosen Betätigen der Zentralverriegelung des Autos befindet, ist ein Chip 24 zur berührungslosen Datenerfassung des Identifikationssystems eingebracht. Durch eine elektrische Verbindung des Chips 24 mit der Batterie 25 (die elektrische Verbindung ist nicht dargestellt) lässt sich erfindungsgemäß die Erfassungsreichweite, mit der die Daten des Chips 24 vom Lesemodul noch erfasst werden können, vergrößern. Zusätzlich ist im dargestellten Ausführungsbeispiel eines Autoschlüssels 20 im Schlüsselgriff 23 noch eine Solarzelle 26 angeordnet, durch welche die Stromversorgung des Chips 24 auch bei Ausfall der Batterie 25 sichergestellt wird.

Die Erfindung ist nicht auf die dargestellten Ausführungsbeispiele beschränkt, sondern sie kann vielmehr überall dort angewendet werden, wo Personen mittels einer Chipkarte oder über Telefondaten berührungslos erfassbar sind und mit der Personenerfassung eine zur Person gehörende, in einem Computer abgespeicherte Kartei, Konto etc. geöffnet werden kann. Hierbei ist die Ausführung der Chipkarte sowie die Anordnung der Einrichtung zur Durchführung des erfindungsgemäßen Verfahrens dem Fachmann freigestellt.

## Patentansprüche

1. Verfahren zur kundenorientierten Nutzung eines elektronischen Identifikationssystems, wobei personenbezogene elektronisch gespeicherte Daten von einem Lesemodul erfasst und von einem Computer (3) ausgewertet werden, **dadurch gekennzeichnet, dass** nach Auswertung der personenbezogenen Daten die Bezugsperson (6) und/oder deren Name visuell dargestellt und/oder akustisch genannt werden und zusätzlich dazu das im Computer (3) abgespeicherte Kundenkonto der Bezugsperson (6) geöffnet und dargestellt wird und/oder ein mit der Bezugsperson (6) in Verbindung stehendes Objekt bzw. dessen Kennzeichen visuell dargestellt wird.

2. Verfahren nach Anspruch 1, **dadurch gekennzeichnet, dass** die personenbezogenen elektronischen Daten auf einer von der Bezugsperson (6) mitgeführten Chipkarte (7) gespeichert sind, wobei die Daten berührungslos erfasst und ausgewertet werden.

3. Verfahren nach Anspruch 1, **dadurch gekennzeichnet, dass** die personenbezogenen elektronischen Daten über eine Telefonverbindung übertragen und beim Empfänger des Telefonanrufs erfasst und ausgewertet werden.

4. Verfahren nach Anspruch 3, **dadurch gekennzeichnet, dass** durch die über die Telefonverbindung übertragenen personenbezogenen Daten vor Aufnahme des Telefongesprächs oder zumindest während des Telefongesprächs beim Angerufenen in einem Computer (3) gespeicherte den Anrufenden kennzeichnende Daten, Fotos, Kundendateien, Kundenkonten etc. selbsttätig geöffnet und auf einem Bildschirm des mit der Telefonanlage verknüpften Computers (3) und/oder auf dem Display der entsprechend ausgestatteten Telefonanlage und/oder auf dem Display eines tragbaren Empfängers visuell abgebildet werden.

5. Verfahren nach einem der Ansprüche 1 bis 4, **dadurch gekennzeichnet, dass** das im Computer (3) gespeicherte Konto der Bezugsperson (6) vom Computer (3) gleichzeitig mit der visuellen und/oder akustischen Darstellung der Bezugsperson (6) selbsttätig oder auf Tastendruck geöffnet wird.

6. Verfahren nach Anspruch 1, **dadurch gekennzeichnet, dass** bei der Identifizierung mehrerer Kundenpersonen (6) diese in der Reihenfolge ihrer Erfassung auf einem Bildschirm eines Computers (3) oder einem Display eines tragbaren Empfängers (9) mit Namenszug und/oder Foto dargestellt und in dieser Reihenfolge die zugehörigen Kundenkonten geöffnet werden.

7. Einrichtung zur kundenorientierten Nutzung eines elektronischen Identifikationssystems insbesondere zur Durchführung des Verfahrens nach einem oder mehreren der Ansprüche 1 bis 6, **gekennzeichnet durch** einen Multifunktions-Chip, auf dem wenigstens eine den Datenschutz nicht berührende unikate Identifikationsnummer gespeichert ist, die im Computer (3) des jeweiligen Computerbetreibers wie Ladengeschäft, Kfz-Werkstatt, Bank, Bibliothek, Arztpraxis, Hotel etc. mit den dort gespeicherten Daten und Konten der jeweiligen Kundenperson (6) verknüpft ist und die bei Aktivierung zusätzlich zur visuellen Darstellung der Kundenperson (6) das Kundenkonto zur Öffnung freischaltet und/oder ein mit der Kundenperson (6) in Verbindung stehendes Objekt auf einem mit dem Computer (3) verbundenen Bildschirm und/oder auf dem Display eines tragbaren Empfängers (9) darstellt.

8. Einrichtung nach Anspruch 7, **dadurch gekennzeichnet, dass** der Computer (3) mit einem Scanner (4) und/oder mit einer digitalen Kamera verbindbar ist, über den bzw. über die das Foto neuer Kundenpersonen (6) in den Computer (3) speicherbar ist.

9. Einrichtung nach Anspruch 7, **dadurch gekennzeichnet, dass** der Multifunktions-Chip statt an einer von der Kundenperson (6) mitgeführten Chipkarte (7) an einem Schlüssel (20), insbesondere im Griff (23) eines Autoschlüssels angeordnet ist, wobei der Chip ggf. mit einer ebenfalls im Schlüsselgriff (23) untergebrachten Batterie (25) sowie ggf. Solarzelle (26) elektrisch verbunden ist.

10. Einrichtung zur kundenorientierten Nutzung eines elektronischen Identifikationssystems, insbesondere zur Durchführung des Verfahrens nach Anspruch 3 oder 4, **gekennzeichnet durch** eine mit einem Computer (3) verknüpfte Telefonanlage.
